Europäisches Patentamt

European Patent Office

Office européen des brevets

(19)

(11) Veröffentlichungsnummer: **0 054 712 B1**

(12) **EUROPÄISCHE PATENTSCHRIFT**

(45) Veröffentlichungstag der Patentschrift:
18.07.84

(21) Anmeldenummer: 81109180.0

(22) Anmeldetag: 29.10.81

(51) Int. Cl.³: **B 23 K 9/18**

(54) Vorrichtung zum Engspalt-Unterpulver-Schweissen.

(30) Priorität: 24.12.80 DE 3049118

(43) Veröffentlichungstag der Anmeldung:
30.06.82 Patentblatt 82/26

(45) Bekanntmachung des Hinweises auf die Patenterteilung:
18.07.84 Patentblatt 84/29

(84) Benannte Vertragsstaaten:
DE FR GB IT NL SE

(56) Entgegenhaltungen:
DE - A - 2 633 829
US - A - 2 567 770
US - A - 3 196 656

(73) Patentinhaber: M.A.N. MASCHINENFABRIK
AUGSBURG-NÜRNBERG Aktiengesellschaft,
Bahnhofstrasse 66, D-4200 Oberhausen 11 (DE)

(72) Erfinder: Lux, Werner, Vestische Strasse 270,
D-4200 Oberhausen 11 (DE)
Erfinder: Vahlensieck, Jürgen, Konstantinstrasse 121,
D-5300 Bonn 2 (DE)
Erfinder: Zell, Jakob, Köstersfeld 39,
D-4200 Oberhausen 11 (DE)
Erfinder: Hermann, Bodo, Hebeleckstrasse 143,
D-4250 Bottrop (DE)
Erfinder: Bartsch, Heinz, Im Scheierbruch 28,
D-4250 Bottrop (DE)
Erfinder: Zimmermann, Horst, Genter Strasse 111,
D-4200 Oberhausen 14 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung bezieht sich auf eine Vorrichtung zum Verbinden von Metallteilen mittels Lichtbogen-Schmelzschweißen, wie diese aus der DE-A-2 633 829 bekanntgeworden ist. Die wesentlichen Merkmale dieser Vorrichtung bestehen aus Mitteln zum Nachschub, zur Führung des Schweißdrahtes und zur Zuführung des Schweißpulvers sowie aus einer quer zur Vorschubrichtung um einen Winkel schwenkbaren Draht- und Stromzuführungsstange in Schwertform mit Drahtführungsorganen, die einen feststehenden Ausleger und einen mittels Federkraft andrückbaren Ausleger aufweist.

Das Engspalt-Unterpulverschweißen findet mehr und mehr Anwendung zum Zusammenfügen von dickwandigen Stahlbauteilen, insbesondere bei der Herstellung von Kernreaktor-Druckgefäßen.

Die Aufgabe der Erfindung besteht darin, die bekannten Vorrichtungen für das Engspalt-UP-Schweißen weiter zu verbessern, um damit noch größere Wanddicken als bisher schweißen zu können. Wegen gesteigerter Sicherheitsanforderungen und größerer Leistungseinheiten, wie auch höherer Drücke weisen Druckgefäße, insbesondere für die Kernreaktortechnik, zunehmend größere Wanddicken auf, die bis zu 1000 mm und mehr anwachsen. Es hat sich jedoch gezeigt, daß die bekannten Vorrichtungen zur Schweißdrahtzuführung bei den neuerdings auftretenden extremen Wanddicken den steigenden Anforderungen nicht mehr genügen. Es müssen an die Qualität und Lagegenauigkeit der Schweißraupen in dem engen Spalt höchste Anforderungen gestellt werden, um eine fehlerfreie Verbindung herzustellen. Je größer die Werkstoffdicke ist, desto länger muß die Draht- und Stromzuführungszange bemessen sein. Zugleich geht aus wirtschaftlichen und metallurgischen Gründen das Bestreben dahin, die Breite des Engspaltes nicht zu vergrößern, sondern möglichst noch enger zu bemessen, um das Volumen der Schweißzone zu verringern und damit die Schweißdauer zu verkürzen. Diese technischen Forderungen stellen höchste Anforderungen an die geometrisch genaue Zuführung des Schweißdrahtes und damit auch an die Formsteifigkeit der Ausleger der Draht- und Stromzuführungszange. Diese Anforderungen an die Steifigkeit der Ausleger sind dann besonders hoch, wenn der Schweißdraht nicht völlig geradegerichtet in die Ausleger einläuft, auf diese quer zur Schweißrichtung eine Biegekraft ausübt, so daß sie auseinandergespreizt werden und damit ihre Führungsfunktion beeinträchtigt wird. Daher ist die Aufgabe der Erfindung darin zu sehen, eine derartige Zuführungsvorrichtung für den Schweißdraht zum Unterpulver-Engspaltschweißen zu schaffen, die es auch bei der Anwendung an Körpern mit extremen Wanddicken von 1000 mm und mehr ermöglicht, die Schweißraupen mit höchster geometrischer Genauigkeit herzustellen und damit hochwertige und fehlerfreie Schweißverbindungen zu schaffen.

Eine weitere Aufgabe der Erfindung besteht darin, die Funktionssicherheit der Draht- und Stromzuführungszange durch Vermeidung von Prozeßstörungen wie Lichtbogenüberschläge, Einbrandkerben, Flankenunterspülungen, u. a. m. zu erhöhen, da beim Engspaltunterpulverschweißen großer Wanddicken die Reparatur von Fehlerstellen gegenüber herkömmlichem Unterpulverschweißen mit weit geöffneter, gut zugänglicher Schweißnaht weitgehend eingeschränkt ist.

Zur Erreichung dieser Ziele erstreckt sich die Erfindung zum einen auf das genaue Richten des in die Draht- und Stromzuführungszange einlaufenden Schweißdrahtes, um zu vermeiden, daß durch ungenügend gerichteten Draht größere Anpreßkräfte auf die Drahtführungsorgane und damit Biegekräfte auf die Ausleger ausgeübt werden, wodurch ferner die Reibung gesteigert und damit auch der Verschleiß erhöht wird, und weiterhin erstreckt sich die Erfindung auf eine funktionssichere Ausbildung der Draht- und Stromzuführungszange, um den Drahtführungsorganen und der Stromübertragung zum Schweißdraht eine größere Stabilität zu verleihen, so daß auch dadurch die Genauigkeit der erhaltenen Schweißraupen wesentlich erhöht wird.

Ausgehend von der bekannten Vorrichtung besteht die Erfindung darin, daß oberhalb der Draht- und Stromzuführungszange zum Richten und Zuführen des Schweißdrahtes mindestens drei hintereinander angeordnete Richtrolleneinheiten von jeweils mindestens drei zusammenwirkenden Richtrollen angeordnet sind, von denen jede Richtrolleneinheit gegenüber jeder vor- oder nachgeschalteten Richtrolleneinheit um einen beliebigen Winkel verdrehbar und in der gewählten Stellung feststellbar ausgebildet ist, und daß die Draht- und Stromzuführungszange einen feststehenden Ausleger mit Führungsschuhen für den Schweißdraht und einen gegenüber diesem parallelverschiebbaren, mit einem Kontaktstück zur Stromzuführung versehenen beweglichen Ausleger aufweist.

Wegen der großen Länge der frei in den Engspalt hineinragenden Draht- und Stromzuführungszange ist es das Ziel der Erfindung, diesen von Biegemomenten soweit als irgend möglich freizuhalten. Daher muß sichergestellt sein, daß der einlaufende Schweißdraht exakt geradegerichtet ist und ferner, daß er in den mehreren Führungsschuhen, die er zu durchlaufen hat, ebenfalls geradegeleitet wird. Um Klemmwirkungseinflüsse auszuschalten und die Führungsfunktion der Drahtführungsschuhe über den gesamten Führungsweg hinweg unbeeinträchtigt aufrechtzuerhalten und bei Verschleißabnutzung eine parallele Nachstellung zu ermöglichen, wird erfindungsgemäß der stromführende Ausleger relativ zum drahtführenden Ausleger parallelverschiebbar ausgebildet.

Nach einem weiteren Merkmal der Erfindung ist die aus mindestens drei gegeneinander verdrehbar und miteinander verbundenen Richtrolleneinheiten bestehende Rollenrichtvorrichtung und der schwenkbare Halterungskörper der Draht- und Stromzuführungszange an einem Halterungsgehäuse befestigt, welches an dem Schweißmaschinensupport angeordnet ist.

Weitere vorteilhafte Erfindungsmerkmale beziehen sich auf die Einzelheiten der Richtrollenvorrichtung, die darin bestehen, daß jede Richtrolleneinheit aus mindestens zwei feststehend gelagerten, im Abstand voneinander angeordneten Richtrollen und aus mindestens einer Gegenrichtrolle besteht, die zwischen den beiden Richtrollen an einem mittels einer Stellvorrichtung anstellbaren Schwenkarm gelagert ist, der mittels Federkraft gegen die Stellvorrichtung im Öffnungssinne angepreßt ist, und ferner, daß der anstellbare Schwenkarm mit der Gegenrichtrolle in einer Gabel gelagert und mittels eines von Hand verstellbaren Gewindestiftes anstellbar ist, und daß am überstehenden Hebelarmende eine Druckfeder angreift, die den Schwenkarm stets gegen den Gewindestift anpreßt.

Erfindungsgemäß ist jede Richtrolleneinheit in ein zylindrisches Rollengehäuse eingebaut, und jedes Rollengehäuse ist mit einem eine Kreisringnut aufweisenden Halterungstopf und mit einem mit engem Sitz in die Kreisringnut passenden Zentrieransatz versehen, und der Zentrieransatz ist mittels umfangsverteilter Anpreßschrauben im Halterungstopf der anschließenden Richtrolleneinheit verspannbar.

Die Anstellbarkeit des beweglichen stromführenden Auslegers in Form einer Parallelverschiebbarkeit bringt den Vorteil mit sich, daß der Schweißdraht am Kontaktstück für die Stromzuführung ebenfalls parallel angedrückt wird.

Nach einem weiteren Erfindungsmerkmal sind im Abstand voneinander mindestens zwei Führungsschuhe für den Schweißdraht am feststehenden drahtführenden Ausleger und ferner im unteren Bereich der Draht- und Stromzuführungszange mindestens ein mit einer Nut- und Federführung versehener Zentrierschuh angeordnet. Durch diese Nut- und Federführung wird eine bessere Verklammerung gegen seitliches Verschieben der beiden Ausleger im unteren Bereich erzielt.

Weiterhin wird erfindungsgemäß vorgeschlagen, daß am unteren Ende der Draht- und Stromzuführungszange der feststehende Ausleger mit einem verschleißfesten, isolierten Gleitstein als Gegendruckplatte für den Schweißdraht versehen ist, der in dem eine dem Schweißdrahtdurchmesser angepaßte Führungsrille aufweisenden, am parallelbewegbaren stromführenden Ausleger angeordneten austauschbaren Kontaktstück aus einem leitenden Werkstoff, vorzugsweise einer Kupferlegierung, geführt ist.

Eine weitere vorteilhafte Verbesserung besteht nach der Erfindung auch noch darin, daß im unteren Bereich des stromführenden Auslegers an seiner Stirnseite mittig in einer isolierten Halterung, mit in parallel zur Schweißdrahtachse verlaufenden Achsbolzen drehbare und austauschbare Führungsrollen angebracht sind, die wechselweise an beiden Nahtflanken der zu verbindenden Teile abrollen. Durch diese Maßnahme wird ein schädliches Anlaufen der Draht- und Stromzuführungszange an den Wandungen des Schweißspaltes vermieden, durch welches eine Störung der Schweißprozeßabläufe hervorgerufen werden könnte.

Eine weitere vorteilhafte Gestaltungsmaßnahme wird erfindungsgemäß dahingehend vorgeschlagen, daß die Dicke der Ausleger der Draht- und Stromzuführungszange von oben nach unten stetig abnimmt. Auf diese Weise kann der zur Verfügung stehende Raum zur statisch wirksamen Verstärkung der Dicke der Draht- und Stromzuführungszange ausgenutzt werden, was angesichts seiner großen Länge von Bedeutung ist.

Die Stabilität der Draht- und Stromzuführungszange ist — wie hervorgehoben — von großer Wichtigkeit, und es wird daher nach der weiteren Erfindung vorgeschlagen, daß die Ausleger mit Kanälen zum Durchleiten eines Kühlmittels und mit entsprechenden Anschlußstutzen für Schlauchanschlüsse versehen sind. Dadurch kann die Temperatur der Ausleger etwa bei 100°C gehalten werden, so daß geometrische Veränderungen infolge unterschiedlicher Erwärmung vermieden werden können.

Diese Kühlung der Ausleger, die durch ein flüssiges oder gasförmiges Medium bewirkt werden kann, hat den weiteren Vorteil, daß auch die aus isolierendem Material bestehenden Führungsschuhe für den Schweißdraht kühl gehalten werden können.

Beide Ausleger bestehen in an sich bekannter Weise aus einem antimagnetischen leitenden Werkstoff, vorzugsweise aus einer Kupferlegierung.

Der zum drahtführenden Ausleger parallelbewegbare Stromführungsausleger ist erfindungsgemäß an zueinander parallelen, senkrecht zur Schweißdrahtachse verlaufenden Führungsschienen oder -säulen gleitend geführt, die im Halterungskörper befestigt sind. Dabei ist die Vorrichtung so ausgebildet, daß der parallelbewegbare Stromführungsausleger unter der Wirkung einer Anpreßkraft in Richtung auf den Schweißdraht angepreßt wird, und daß die Größe der Anpreßkraft mittels einer Stellvorrichtung veränderbar ist.

Die Größe der Anpreßkraft muß dabei so einstellbar sein, daß am Schweißdraht eine ausreichende Andrückung des Kontaktstücks zur Stromübertragung erreicht wird, ohne daß jedoch eine zu große Reibung zwischen Schweißdraht und Kontaktstück auftritt. Daher ist vorgesehen, daß die Größe der Anpreßkraft mittels einer eingebauten Druckmeßdose an einem Meßinstrument ablesbar ist.

Die Abnutzung der Führungsrille für den Schweißdraht im Kontaktstück führt infolge der Anpressung des Stromführungsauslegers zu einer allmählichen Parallelverschiebung in Richtung auf den feststehenden Ausleger. Da es vorteilhaft ist, die Größe des Verschleißes pro Zeiteinheit bzw. Schweißdrahtdurchlaufzeit zu kennen, um die Eignung der verwendeten Werkstoffe zu prüfen und ferner um zur rechten Zeit das Kontaktstück zu ersetzen, wird erfindungsgemäß weiter vorgeschlagen, eine Anzeigevorrichtung anzuordnen, welche mittels einer Anzeige die Größe der Relativverschiebung zwischen dem feststehenden und dem parallelbewegbaren Ausleger angibt.

In an sich bekannter Weise ist die Halterung der Draht- und Stromzuführungszange in beiden Richtungen quer zur Schweißrichtung um einen Schwenkbolzen schwenkbar, damit das Legen der Schweißraupen an die Wandungen des Engspaltes ermöglicht werden kann. Zur Durchführung dieser Verstellung ist erfindungsgemäß vorgesehen, daß die Halterung der Draht- und Stromzuführungszange an ihrem der Draht- und Stromzuführungszange entgegengesetzten Ende eine Bohrung aufweist, die von einer Verstellspindel durchsetzt ist, die in Querrichtung verstellbar und mit an der Halterung anliegenden Mitnahmeorganen ausgerüstet ist. Zur Betätigung dieser Verstellspindel wird erfindungsgemäß vorgeschlagen, daß diese an einem Ende mit einem steilgängigen Gewinde versehen ist, welches durch Drehbewegung in einer Mutter in beiden Drehrichtungen einen Verstellweg ausführt und mittels der Mitnahmeorgane die Halterung der Draht- und Stromzuführungszange im Sinne einer Schwenkung verstellt.

Hierbei ist es nach einem weiteren Vorschlag gemäß der Erfindung zweckmäßig, die Anordnung so zu treffen, daß die Mutter mit dem steilgängigen Gewinde, in dem sich die Verstellspindel dreht, in Querrichtung einstellbar ist, um eine genaue Mittenjustierung der Draht- und Stromzuführungszange zu ermöglichen. Dies kann dadurch erreicht werden, daß die Mutter in einer der Querjustierung dienenden, im Halterungsgehäuse angebrachten Einstellhülse querverschiebbar und feststellbar gehalten ist.

Die Verstellbetätigung der Verstellspindel nach dem Erfindungsgedanken kann sowohl von Hand wie auch motorisch erfolgen, und zwar in der Weise, daß stets nach Fertigstellung einer Schweißraupe die Verstellung in einer Mittellage oder in die andere Schwenklage bewirkt wird, je nachdem, ob im Engspalt mit einer, zwei, drei oder mehr Schweißraupen geschweißt wird.

Für die Handbetätigung der Verstellspindel wird nach der Erfindung vorgeschlagen, daß die Verstellspindel an ihrem gewindeseitigen Ende mittels einer Wellennutführung und einem axial unverschiebbaren, jedoch drehbaren Bolzen und einem an diesem befestigten Verstellhebel um je eine Drehbewegung in beiden Drehrichtungen aus der Mittellage herausverschiebbar ist.

Vorteilhafterweise ist hierzu die weitere Ausbildung so getroffen, daß die Verstellspindel in ihrem in der Bohrung der Halterung gelagerten Bereich eine Vertiefung aufweist, in welche in der Mittelstellung eine unter Federwirkung stehende Raste kraftschlüssig eingreift und die Verstellspindel wie die Halterung der Draht- und Stromzuführungszange in der Mittelstellung lösbar verriegelt.

In weiterer Ausbildung der Verstellvorrichtung ist vorgesehen, daß zwischen den Verstell-Mitnahmeorganen und der Halterung der Draht- und Stromzuführungszange eine gewisse Nachgiebigkeit hergestellt wird, um eventuelle Schweißspaltschwankungen elastisch nachfahren zu können und unabhängig von der Schweißspaltbreite eine genaue Legung der Schweißraupen an den Nahtflanken zu gewährleisten. Daher wird erfindungsgemäß vorgeschlagen, daß die Mitnahmeorgane als auf der Verstellspindel drehbare Scheiben aus einem Gleitwerkstoff ausgebildet sind, _ _ter der Kraftwirkung von Schraubenfedern _ _ _n, deren Widerlager mittels Kontermutter _ _erart auf Gewinde-Abschnitten der Verstellspindel befestigt sind, daß die jeweils gewünschte Federvorspannung einstellbar ist.

Durch diese Ausbildungsweise wird darüber hinaus ermöglicht, daß mittels der an der Draht- und Stromzuführungszange angebrachten Führungsrollen dauernd der gewünschte und durch die Wahl des Rollendurchmessers bestimmte Abstand zwischen der jeweiligen Wandung des Schweißspaltes und dem Schweißdraht eingehalten wird. Der maximale Schwenkwinkel der Draht- und Stromzuführungszange wird etwas größer eingestellt, als zur Erreichung des Mindestabstandes gegenüber den Schweißspaltwandungen erforderlich ist. In diesem Falle kommen die Rollen stets in Kontakt mit der Wandung und behalten diesen auch bei, so daß durch die Federanpressung eine exakte Führung des Schweißkopfes in gleichbleibendem Abstand entlang dieser Wandung erzielt wird, auch dann, wenn Unregelmäßigkeiten des Nahtflanken-Verlaufes auftreten. Mit dieser Anordnung und Einstellung des Schwenkwinkels wird somit in optimaler Weise bei größter Betriebssicherheit eine präzise Lage der einzelnen Schweißraupen erzielt.

Die Erfindung ist in der Zeichnung an Hand eines Ausführungsbeispiels dargestellt, welches im folgenden näher beschrieben ist. Es zeigt

Fig. 1 eine perspektivische Darstellung der wesentlichen Elemente der Vorrichtung und ihrer Verwendung zum Schweißen in einem Engspalt;

Fig. 2 einen Teilschnitt des oberen Teils der Vorrichtung;

Fig. 3 eine Ansicht des unteren Teils der Vorrichtung mit einigen Teilschnitten von Einzelheiten;

Fig. 4 einen Querschnitt I-I durch die Rollenrichtvorrichtung;

Fig. 5 einen Schnitt II-II durch die Schwenkvorrichtung der Draht- und Stromzuführungszange;

Fig. 6 eine Stirnansicht des unteren Teils der Vorrichtung im Schweißspalt;

Fig. 7 eine Einzelheit bei D;

Fig. 8 eine Einzelheit bei E im Schnitt;

Fig. 9 einen Querschnitt III-III durch die Ausleger mit den Kühlkanälen;

Fig. 10 einen Querschnitt IV-IV durch die Ausleger mit einem Führungsschuh für den Schweißdraht;

Fig. 11 einen Querschnitt V-V (gem. Fig. 10);

Fig. 12 einen Querschnitt VI-VI (gem. Fig. 10) mit den Führungsrollen;

Fig. 13 einen Querschnitt VII-VII durch den Stromzuführungsteil.

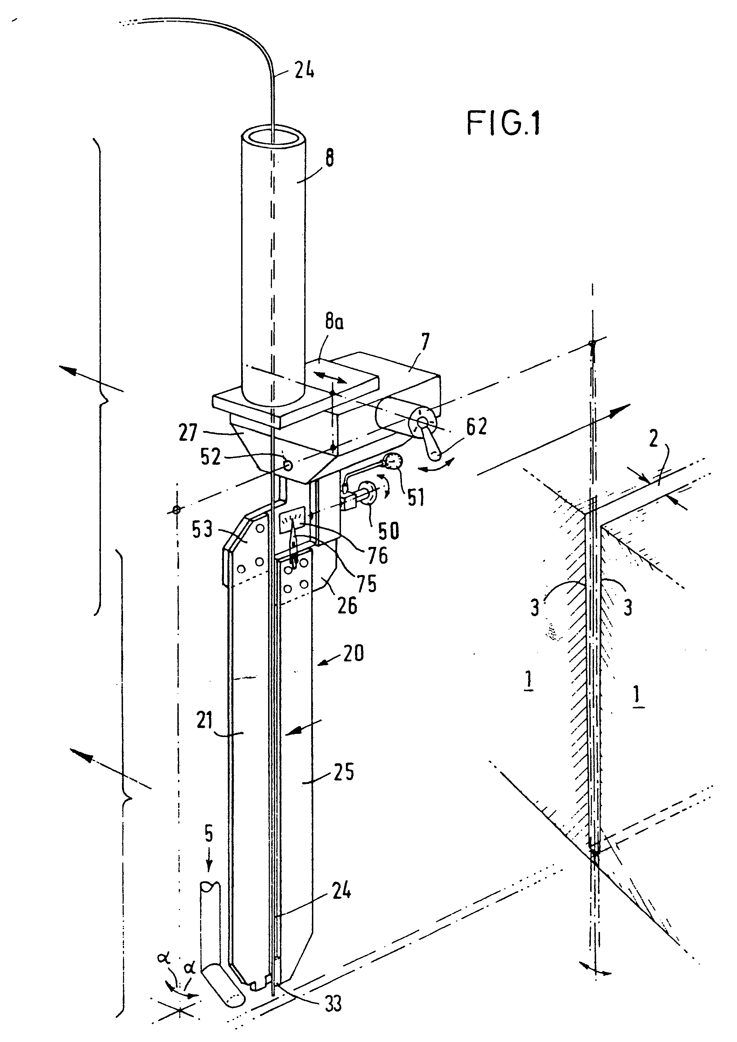

Die perspektivische Darstellung in Fig. 1 zeigt die Vorrichtung mit ihren wesentlichen Teilen und ebenfalls perspektivisch den Einsatz der Vorrichtung durch Einfahren längs der strichpunktierten Linien in den Schweißspalt 2, in dem der Raum mit nahezu parallelen Nahtflanken, ausgehend vom Grund, mit Schweißraupen gefüllt wird, wie dies auch aus Fig. 6 ersichtlich ist, wo die ersten drei Raupen entsprechend ihren Lagen mit A, B und C bezeichnet sind.

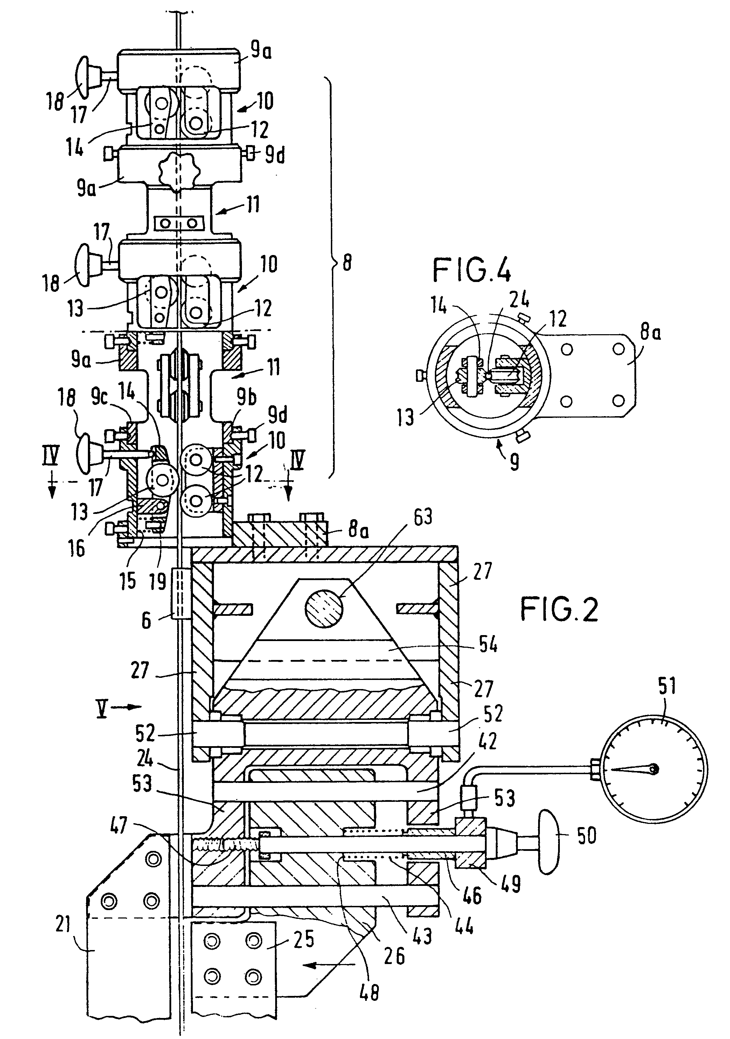

Die Vorrichtung besteht aus dem Halterungsgehäuse 7, welches an einem nicht dargestellten, entsprechend des Schweißnahtverlaufes beweglichen Schweißmaschinensupport angebracht ist. An dem Halterungsgehäuse 7 sind die Rollenrichtvorrichtung 8 mittels des Flansches 8a und mittels des in dessen Seitenwänden 27 gelagerten Schwenkbolzens 52 der Draht- und Stromzuführungszange 20 mit Führungselementen für den Schweißdraht 24 angebracht (Fig. 2).

Die Draht- und Stromzuführungszange besteht aus dem feststehenden Drahtführungsausleger 21 und dem parallelbewegbaren Stromführungsausleger 25 mit den im folgenden beschriebenen Vorrichtungen sowie aus der nicht näher dargestellten Zuführung 5 für das Schweißpulver.

Die in Fig. 1 dargestellte Vorrichtung ist mit dem Verstellgriff 62 für die Querschwenkung der Draht- und Stromzuführungszange 20 und mit der Verstellvorrichtung 50 für die Federvorspannung und die Anzeige der Federvorspannung 51 versehen, welche auf den Stromführungsausleger wirkt.

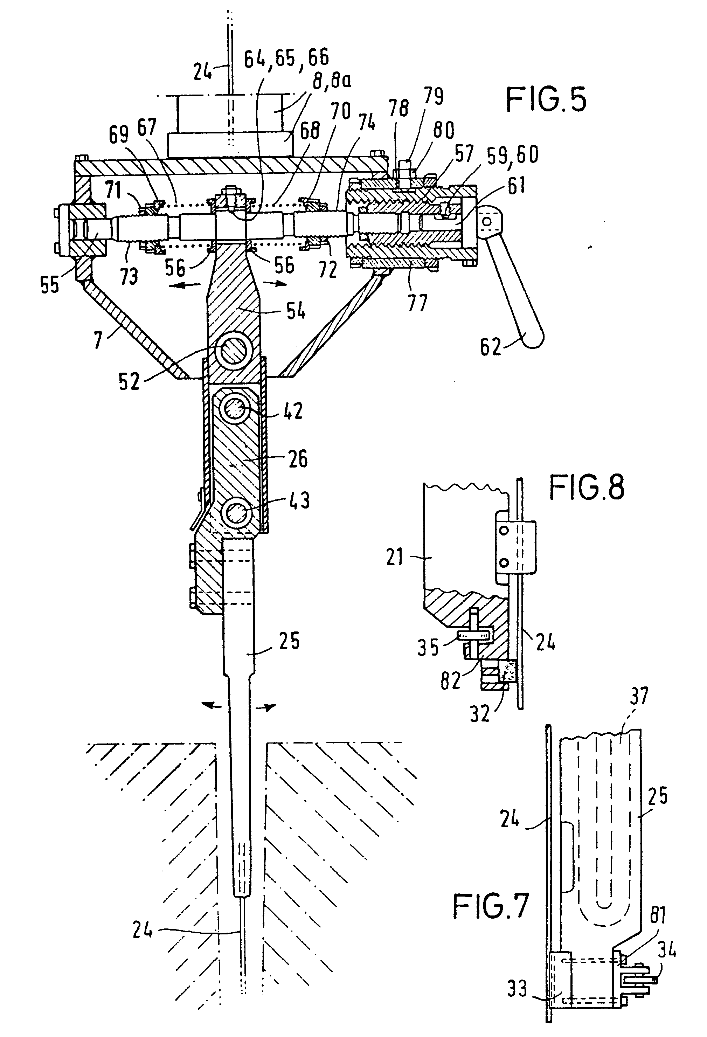

Die Einzelheiten der Rollen-Richtvorrichtung für den Schweißdraht 24 gehen aus Fig. 2 und 4 hervor. Die dargestellte Vorrichtung besteht aus fünf Richtrolleneinheiten 10, 11, von denen die beiden untersten Einheiten 10 und 11 im Schnitt gezeigt sind. Diese und die folgenden Einheiten sind jeweils um 180° versetzt zueinander angeordnet. Es können jedoch beliebige andere Winkelstellungen der Einheiten zueinander gewählt werden, um den bestmöglichen Richteffekt zu erzielen. Jede Einheit besteht aus zwei in einem Abstand voneinander feststehend gelagerten Richtrollen 12 und einer Gegenrichtrolle 13, die zwischen den beiden Richtrollen 12 an einem anstellbaren Schwenkarm 14 gelagert ist. Der Schwenkarm 14 ist in einer Gabel 16 gelagert und kann mittels eines Gewindestiftes 17 und eines Handgriffs angestellt werden. Mittels des Handgriffs 18 kann eine Feinjustierung jeder Gegenrichtrolle 13 vorgenommen werden. Durch die Feder 15 wird die Gegenrichtrolle 13 beim Lösen des Gewindestiftes 17 zurückgedrückt, wodurch eine ungehinderte Drahteinführung möglich ist.

Jede Richtrolleneinheit 10, 11 ist in einem zylindrischen Gehäuse 9 eingebaut, welches mit einem Halterungstopf 9a versehen ist. Dieser weist eine zylindrische Eindrehung 9b auf, in die mit engem Sitz ein Zentrieransatz 9c mit einer Ringnut im Schraubenbereich paßt und mittels umfangsverteilter Anpreßschrauben 9d verspannt werden kann.

Die Rollenrichtvorrichtung 8 ist mittels des Flansches 8a an das Halterungsgehäuse 7 angeschraubt. In dessen Seitenwandungen 27 ist der Schwenkbolzen 52 befestigt, um den der Halterungsköper 53 der Draht- und Stromzuführungszange 20 um den Winkel $\alpha$ schwenkbar ist.

Die Einzelheiten der Schwenkvorrichtung gehen aus Fig. 5 hervor. Der Halterungskörper 54 weist eine Bohrung 63 auf, die von der Verstellspindel 55 durchsetzt ist. Diese weist an einem Ende eine Gewindebuchse mit steilgängigem Gewinde 57 auf, welche zusammen mit der Verstellspindel durch Drehbewegung in der Mutter 58 in beiden Drehrichtungen einen Verstellweg ausführt. Auf der Verstellspindel 55 sind mittels Kontermuttern 71, 72 einstellbare Widerlager 69, 70 für Schraubenfedern 67, 68 angeordnet, welche die lose auf der Spindel 55 geführten drehbaren Scheiben 56 aus einem Gleitwerkstoff an die Seitenflächen des Halterungskörpers 54 andrücken. Durch diese Anordnung wird eine federnd nachgiebige Mitnahme des Halterungskörpers 53, 54 mit der an ihm befestigten Draht- und Stromzuführungszange 20 bewirkt, und zwar in dem Sinne, daß bereits nach einem kleineren Schwenkausschlag als dem maximal möglichen die Draht- und Stromzuführungszange mit ihren Rollen 34, 35 an der einen oder anderen Seitenwand 3 des Schweißspaltes 2 anläuft.

In der Mittelstellung der Verstellspindel 55 ist der Halterungskörper 54 in der Weise mit dieser verriegelt, daß eine in dessen Bohrung 63 angeordnete Raste 66 unter Federwirkung kraftschlüssig in eine Vertiefung 64 eingreift, so daß damit die Mittelstellung stets genau einhaltbar ist. Um eine Justierung der ganzen Einrichtung in dieser Mittelstellung zu ermöglichen, ist die Mutter 58 mit dem steilgängigen Gewinde 57 in einer in dem Halterungsgehäuse 7 angebrachten Einstellhülse 77 querverschiebbar und feststellbar gehalten. Zu diesem Zweck ist die Mutter 58 mit einer Längsnut 78 versehen, in welche eine Stiftschraube 79 mit Kontermutter 80 eingreift.

Die Schwenkbewegung der Draht- und Stromzuführungszange 20 wird mittels des Verstellgriffs 62 bewirkt, der auf einem drehbaren, axial nicht verschiebbaren Bolzen 61 sitzt und der die Drehbewegung mittels eines in eine Nut 59 eingreifenden Stiftes 60 über die Gewindebuchse 57 auf die Verstellspindel 55 überträgt.

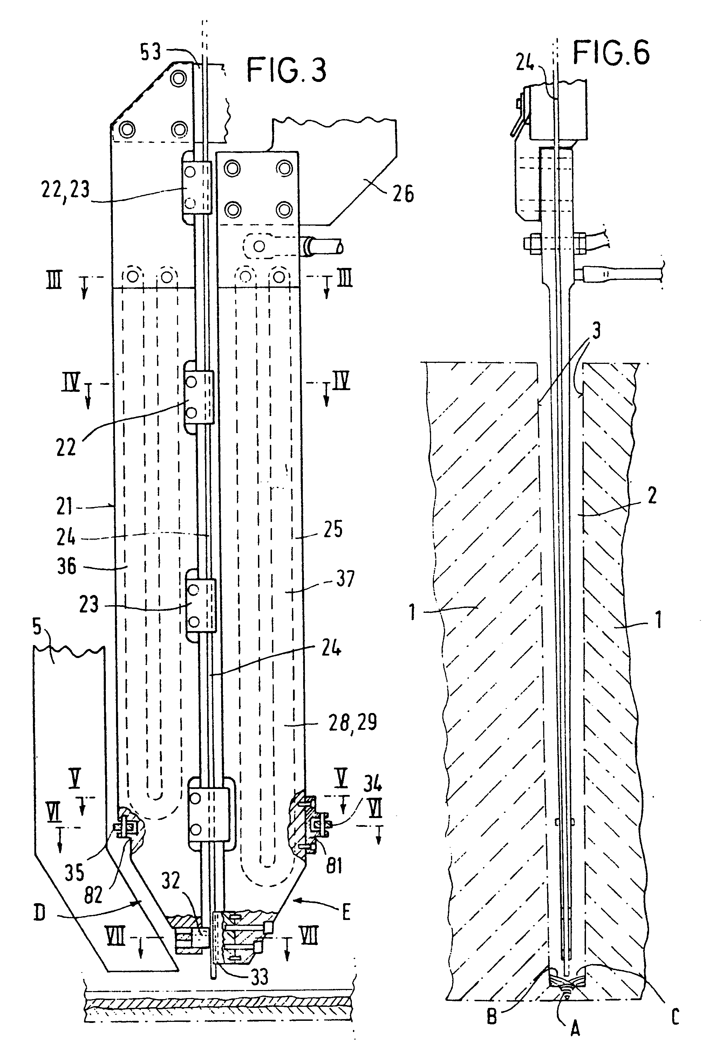

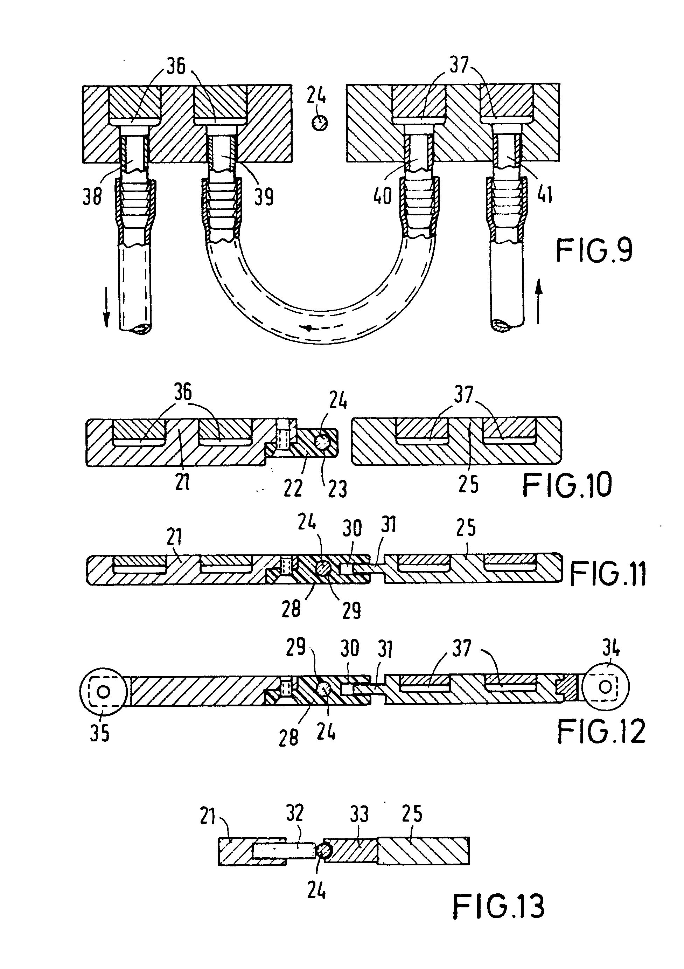

Die Ausbildung der beiden Ausleger 21, 25 ist aus den Fig. 3 und 6 bis 13 zu ersehen. Der feststehende Drahtführungsausleger 21 ist am Halterungskörper 53 befestigt. In Abständen ist es mit den Führungsschuhen 22, 23 (siehe auch Fig. 10) für den Schweißdraht 24 versehen. Im unteren Bereich ist die aus Fig. 11 näher ersichtliche Schweißdrahtführung angebracht, die aus dem Führungsschuh 28, 29 und der in die Nut 30 eingreifenden Feder 31 besteht, welche einen Teil des Stromführungsauslegers 25 bildet. Der Drahtführungsausleger 21 muß an dieser Stelle gegenüber dem Stromführungsausleger 25 isoliert sein. Dies wird erreicht, wenn der Führungsschuh 28, 29 aus einem nichtleitenden Werkstoff besteht.

Im unteren Bereich der beiden Ausleger 21, 25 sind ferner die Führungsrollen 34, 35 mittels entsprechender Lager 81, 82 austauschbar angeordnet. Diese dienen dazu, den durch die Wahl des Rollendurchmessers vorbestimmten Abstand der Draht- und Stromzuführungszange 20 gegenüber den Nahtflanken 3 im Schweißspalt aufrechtzuerhalten. Je nach Erfordernissen können die Führungsrollen 34, 35 im oberen Schweißnahtbereich nahe dem unteren Ende des Schweißkopfes 20 — siehe Fig. 7 und 8 — oder etwas höher im tieferen Schweißnahtbereich — wie in Fig. 3 dargestellt — angebracht werden.

Der parallelbewegliche Stromführungsausleger 25 ist mit seinem Kopfstück 26 an den Führungssäulen 42, 43 gleitend geführt, die in den Seitenwandungen des um den Schwenkbolzen 52 schwenkbaren Halterungskörpers 53 befestigt sind. Der Federdruck wird von der Schraubenfeder 44 bewirkt, die sich gegen das einstellbare Federwiderlager 46 abstützt und auf das Gegenlager 48 im Kopfstück 26 des Stromführungsauslegers 25 wirkt. Die Verstellung des Federwiderlagers 46 mittels des Handrades 50 erfolgt durch die Verstellspindel 47 durch Drehung im Halterungskörper 53. Eine nicht dargestellte, im Widerlager 46 eingebaute Druckmeßdose wirkt über den Anschluß 49 auf das Anzeigeinstrument 51.

Wie ferner aus den Fig. 3 und 9 bis 12 ersichtlich ist, sind die Ausleger mit Kanälen 36, 37 zum Durchleiten eines Kühlmittels und mit den erforderlichen Schlauchanschlüssen 38, 39, 40, 41 versehen, um das Kühlmittel mittels Schlauchverbindungen zu- und abzuleiten. Am unteren Ende der Draht- und Stromzuführungszange 20 ist die Vorrichtung zum Auslauf und zur Stromübertragung des Schweißdrahtes 24 angeordnet. Sie besteht aus einem verschleißfesten, isolierten Gleitstein 32, der auswechselbar im Bereich des unteren Endes des feststehenden Drahtführungsauslegers 21 angebracht ist. Gegen diesen Gleitstein 32 wird der Schweißdraht 24 mittels des Kontaktstückes 33 — siehe Fig. 13 — angedrückt. Das Kontaktstück 33 ist mit einer dem Schweißdrahtdurchmesser angepaßten Führungsrille versehen und besteht aus einer verschleißarmen Kupferlegierung. Das Kopfstück ist angeschraubt und kann bei Verschleiß leicht ausgetauscht werden. Die Abnutzung des Kontaktstückes wird dadurch ausgeglichen, daß der unter Federanpreßdruck stehende Stromführungsausleger 25 laufend nachgestellt wird. Der Betrag der Nachstellung wird an einer Anzeigevorrichtung 75, 76 angezeigt, an der die Relativverschiebung zwischen dem feststehenden und dem parallelbewegbaren Ausleger 21 und 25 ablesbar ist.

Durch die Rollenrichtvorrichtung ist es auf Grund ihrer besonderen Merkmale möglich, den von der Rolle abgenommenen Schweißdraht exakt geradezurichten und diesen ohne Störungen in den Bereich der Draht- und Stromzuführungszange zu transportieren. Unterhalb der Rollenrichtvorrichtung wird er noch durch den Führungsschuh 6 weitergeleitet. Es hat sich gezeigt, daß die geringfügige Krümmung, die durch das leichte Schwenken der Draht- und Stromzuführungszange 20 sich ergibt, von dem Schweißdraht auf dem Weg zwischen dem Führungsschuh 6 und dem obersten Führungsschuh 22, 23 innerhalb der Draht- und Stromzuführungszange ohne Auswirkung bleibt. Durch die erfindungsgemäße Gestaltung der Draht- und Stromzuführungszange 20 mit ihren Hilfsvorrichtungen wird sichergestellt, daß diese nur geringen Verformungen ausgesetzt ist. Hinzu kommt die günstige Formgestaltung, die vorgesehene Kühlung und ferner auch die gegenseitige formschlüssige Führung der beiden Ausleger 21, 25. Durch das Zusammenwirken dieser Besonderheiten der einzelnen Vorrichtungen wird eine höchstmögliche Präzision und Genauigkeit der Lage der einzelnen Schweißraupen in dem engen Schweißspalt infolge der exakten Führung der Draht- und Stromzuführungszange 20 erzielt, was sich vor allem bei extrem großen Wanddicken mit tiefen Schweißspalten vorteilhaft auswirkt.

## Patentansprüche

1. Vorrichtung zum Verbinden von Metallteilen mittels Lichtbogenschmelzschweißen durch eine volumenarme Schweißnaht (Engspaltschweißen), bestehend aus Mitteln zum Nachschub und zur Führung des Schweißdrahtes und zur Zuführung des Schweißpulvers sowie aus einer quer zur Vorschubrichtung um einen Winkel schwenkbaren Draht- und Stromzuführungszange (20) in Schwertform mit Drahtführungsorganen, die einen feststehenden Ausleger (21) und einen mittels Federkraft andrückbaren Ausleger (25) aufweist, dadurch gekennzeichnet, daß oberhalb der Draht- und Stromzuführungszange (20) zum Richten und Zuführen des Schweißdrahtes mindestens drei hintereinander angeordnete Richtrolleinheiten (10, 11) von jeweils mindestens drei zusammenwirkenden Richtrollen (12, 13) angeordnet sind, von denen jede Richtrolleinheit (10) gegenüber jeder vor- oder nachgeschalteten Richtrolleinheit (11) um einen beliebigen Winkel verdrehbar und in der gewählten Stellung feststellbar ausgebildet ist, und daß die Draht- und Stromzuführungszange (20) einen feststehenden Ausleger (21) mit Führungsschuhen (22, 23) für den Schweißdraht (24) und einen gegenüber diesem parallelverschiebbaren, mit einem Kontaktstück (33) zur Stromzuführung versehenen beweglichen Ausleger (25) aufweist.

2. Vorrichtung nach Anspruch 1, dadurch gekennzeichnet, daß die aus mindestens drei gegeneinander verdrehbar miteinander verbundenen Richtrolleneinheiten (10, 11) bestehende Rollenrichtvorrichtung (8) und der Halterungskörper (53) der Draht- und Stromzuführungszange (20) mittels eines Schwenk-Achsbolzens (52) am Halterungsgehäuse (7) befestigt sind, welches an dem Schweißmaschinensupport angeordnet ist.

3. Vorrichtung nach den Ansprüchen 1 und 2, dadurch gekennzeichnet, daß jede Richtrolleneinheit (10, 11) in einem zylindrischen Rollengehäuse (9) eingebaut ist.

4. Vorrichtung nach Anspruch 3, dadurch gekennzeichnet, daß jedes Rollengehäuse (9) mit einem eine zylindrische Eindrehung (9b) aufweisenden Halterungstopf (9a) und mit einem mit engem Sitz in die zylindrische Eindrehung (9b) passenden Zentrieransatz (9c) mit einer Ringnut im Schraubenbereich versehen ist und daß der Zentrieransatz (9c) mittels umfangsverteilter Anpreßschrauben (9c) im Halterungstopf (9a) verspannbar ist.

5. Vorrichtung nach Anspruch 1, dadurch gekennzeichnet, daß im Abstand voneinander mindestens zwei Führungsschuhe (22, 23) für den Schweißdraht (24) am Ausleger (21) und ferner im unteren Bereich der Draht- und Stromzuführungszange (20) mindestens ein mit einer Nut- und Federführung (30, 31) versehener Zentrierschuh (28) angeordnet sind.

6. Vorrichtung nach den Ansprüchen 1 bis 5, dadurch gekennzeichnet, daß am unteren Ende der Draht- und Stromzuführungszange (20) der Ausleger (21) mit einem verschleißfesten, isolierten Gleitstein (32) als Gegendruckplatte für den Schweißdraht (24) versehen ist, der in dem eine dem Schweißdrahtdurchmesser angepaßte Führungsrille aufweisenden, am parallelbewegbaren Ausleger (25) angeordneten austauschbaren Kontaktstück (33) aus einem leitenden Werkstoff, vorzugsweise einer Kupferlegierung, geführt ist.

7. Vorrichtung nach den Ansprüchen 1 bis 6, dadurch gekennzeichnet, daß im unteren Bereich der Draht- und Stromzuführungszange (20) ein oder beide Ausleger (21, 25) an ihren Stirnseiten mittig in einer isolierenden Halterung mit in parallel zur Schweißdrahtachse verlaufenden Achsbolzen drehbaren und austauschbaren Führungsrollen (34, 35) versehen sind.

8. Vorrichtung nach den Ansprüchen 1 bis 7, dadurch gekennzeichnet, daß die Dicke der Ausleger (21, 25) von oben nach unten stetig abnimmt.

9. Vorrichtung nach den Ansprüchen 1 bis 8, dadurch gekennzeichnet, daß die Ausleger (21, 25) mit Kanälen (36, 37) zum Durchleiten eines Kühlmittels und mit entsprechenden Anschlußstutzen für Schlauchanschlüsse (38, 39, 40, 41) versehen sind.

10. Vorrichtung nach den Ansprüchen 1 bis 9, dadurch gekennzeichnet, daß die Ausleger (21, 25) aus einem antimagnetischen Werkstoff mit guten thermischen und elektrischen Leiteigenschaften bestehen.

11. Vorrichtung nach den Ansprüchen 1 bis 10, dadurch gekennzeichnet, daß der zum Ausleger (21) parallelbewegbare Ausleger (25) an zueinander parallelen, senkrecht zur Schweißdrahtachse verlaufenden Führungsschienen oder -säulen (42, 43) gleitend geführt ist, die im Halterungskörper (53) befestigt sind.

12. Vorrichtung nach den Ansprüchen 1 bis 11, dadurch gekennzeichnet, daß der parallelbewegbare Ausleger (25) unter der Wirkung einer Anpreßkraft in Richtung auf den Schweißdraht (24) angepreßt wird und daß die Größe der Anpreßkraft mittels einer Stellvorrichtung (47, 48, 49, 50) veränderbar ist.

13. Vorrichtung nach Anspruch 12, dadurch gekennzeichnet, daß die Größe der Anpreßkraft mittels einer eingebauten Druckmeßdose an einem Meßinstrument (51) ablesbar ist.

14. Vorrichtung nach den Ansprüchen 1 bis 11, dadurch gekennzeichnet, daß am Halterungskörper (53) oder am Ausleger (21) eine Anzeigevorrichtung (75, 76) angeordnet ist, deren Anzeige die Relativverschiebung zwischen dem feststehenden (21) und dem parallelbewegbaren Ausleger (25) angibt.

15. Vorrichtung nach den Ansprüchen 1 bis 18, dadurch gekennzeichnet, daß die Halterung (53) der Draht- und Stromzuführungszange (20) in beiden Richtungen quer zur Vorschubrichtung um einen Schwenkbolzen (52) um einen Winkel ($\alpha$) schwenkbar ist.

16. Vorrichtung nach Anspruch 15, dadurch gekennzeichnet, daß die Halterung (53) der Draht- und Stromzuführungszange (20) an ihrem der Schweißdrahtzuführung entgegengesetzten Ende (54) eine Bohrung aufweist, die von einer Verstellspindel (55) durchsetzt ist, die in Querrichtung verstellbar und mit an der Halterung (54) anliegenden Mitnahmeorganen (56) ausgerüstet ist.

17. Vorrichtung nach Anspruch 15, dadurch gekennzeichnet, daß die Verstellspindel (55) an einem Ende mit einer steilgängigen Gewindebuchse (57) versehen ist, welche durch Drehbewegung in einer Mutter (58) in beiden Drehrichtungen einen Verstellweg ausführt und mittels der Mitnahmeorgane (56) die Schweißkopfhalterung (53) im Sinne einer Schwenkung verstellt.

18. Vorrichtung nach Anspruch 16, dadurch gekennzeichnet, daß die Mutter (58) in einer der Querjustierung dienenden, im Halterungsgehäuse (7) angebrachten Einstellhülse (77) querverschiebbar und feststellbar gehalten ist.

19. Vorrichtung nach Anspruch 16, dadurch gekennzeichnet, daß die Verstellspindel (55) an ihrem gewindeseitigen Ende mittels einer Wellennutführung (59, 60) und einem axial unverschiebbaren, jedoch drehbaren Bolzen (61) und einem an diesem befestigten Verstellgriff (62) um je eine Drehbewegung in beiden Drehrichtungen aus einer Mittellage herausverschiebbar ist.

20. Vorrichtung nach Anspruch 19, dadurch gekennzeichnet, daß die Verstellspindel (55) in ihrem in der Bohrung (63) der Halterung (53) gelagerten Bereich eine Vertiefung (64) aufweist, in welche in der Mittelstellung eine unter Federwirkung stehende Raste (66) kraftschlüssig eingreift und die Verstellspindel (55) wie die Halterung (53) in der Mittelstellung gegeneinander lösbar verriegelt.

21. Vorrichtung nach den Ansprüchen 14 bis 20, dadurch gekennzeichnet, daß die Mitnahmeorgane (56) als auf der Verstellspindel (55) drehbare Scheiben (56) aus einem Gleitwerkstoff ausgebildet sind, die unter der Kraftwirkung von Schraubenfedern (67, 68) stehen, deren Widerlager (69, 70) mittels Kontermuttern (71, 72) derart auf Gewinde-Abschnitten (73, 74) der Verstellspindel (55) befestigt sind, daß die jeweils gewünschte Federvorspannung einstellbar ist.

### Claims

1. Apparatus for joining metal parts by means of arc fusion welding by a low-volume weld (narrow gap welding), consisting of means for forward feeding and for guiding the welding wire and for the feeding of the welding powder, and also comprising, pivotable about an angle transversely to the direction of forward feed, a pair of wire and power supply grippers (20) of sword shape with wire feed means comprising a fixed arm (21) and an arm (25) which can apply pressure by means of spring force, characterised in that above the pair of wire and power supply grippers (20), for directing and feeding the welding wire, there are disposed one after another at least three aligning roller units (10, 11) of in each case at least three co-operating aligning rollers (12, 13), of which each aligning roller unit (10) is rotatable through any desired angle in respect of each upstream or downstream aligning roller unit (11) and is constructed to be lockable in the selected position, and in that the pair of wire and power supply grippers (20) have a fixed arm (21) with guide shoes (22, 23) for the welding wire (24) and a movable arm (25) provided with a contact member (33) for current supply and displaceable parallel with the welding wire (24).

2. Apparatus according to claim 1, characterised in that the roller aligning device (8) which consists of at leazt three mutually rotatably interconnected aligning roller units (10, 11) and the mounting (53) of the pair of wire and power supply grippers (20) are fixed by means of a pivot member (52) on the supporting housing (7) which is disposed on the welding machine support.

3. Apparatus according to claims 1 and 2, characterised in that each aligning roller unit (10, 11) is built into a cylindrical roller housing (9).

4. Apparatus according to claim 3, characterised in that each roller housing (9) is provided with a pot-shaped holder (9a) which has a cylindrical recess (9b) machined into it and, fitting closely into the latter, a centring shoulder (9c) with an annular groove in the screwing area, and in that the centring member (9c) can be clamped in the potshaped holder (9a) by peripherally distributed pressing screws (9c).

5. Apparatus according to claim 1, characterised in that at a distance from each other there are at least two guide shoes (22, 23) for the welding wire (24) on the arm (21) and furthermore, in the lower part of the pair of wire and power supply grippers (20), at least one centring shoe (28) which is provided with a tongue-and-groove guide (30, 31).

6. Apparatus according to claims 1 to 5, characterised in that at the bottom end of the pair of wire and power supply grippers (20), the arm (21) is provided with a wear-resistant insulated sliding block (32) which serves as a thrust plate against which the welding wire (24) can bear, the said welding wire (24) being guided in the exchangeable contact member (33) which consists of a conductive material, preferably a copper alloy, and which has a guide groove adapted to the welding wire diameter, the said contact member (33) being disposed on the parallel-movable arm (25).

7. Apparatus according to claims 1 to 6, characterised in that in the lower part of the pair of wire and power supply grippers (20), one or both arms (21, 25) are provided on their end faces centrally and in an insulating holder with guide rollers (34, 35) which are exchangeable and which are rotatable in pivot pins which extend parallel with the welding wire axis.

8. Apparatus according to claims 1 to 7, characterised in that the thickness of the arm (21, 25) diminishes steadily from the top downwards.

9. Apparatus according to claims 1 to 8, characterised in that the arms (21, 25) are provided with passages (36, 37) through which a coolant can pass and in that they have corresponding connecting unions for hose connections (38, 39, 40, 41).

10. Apparatus according to claims 1 to 9, characterised in that the arms (21, 25) consist of an anti-magnetic material having good thermal and electrical conductive properties.

11. Apparatus according to claims 1 to 10, characterised in that the arm (25) which is movable parallel with the arm (21) is slidingly guided on mutually parallel guide rails or columns (42, 43) which extend at a rigth-angle to the welding wire axis and which are secured in the supporting member (53).

12. Apparatus according to claims 1 to 11, characterised in that the parallelmovable arm (25) is pressed in the direction of the welding wire (24) under the action of a pressing force and in that the magnitude of the pressing force is variable by means of an adjusting device (47, 48, 49, 50).

13. Apparatus according to claim 12, characterised in that the magnitude of the pressing force can be read off at a measuring instrument (51) by means of an incorporated pressure measuring capsule.

14. Apparatus according to claims 1 to 11, characterised in that on the support member (53) or on the arm (21) there is a display device (75, 76), the display of which shows the relative displacement between the fixed arm (21) and the parallel movable arm (25).

15. Apparatus according to claims 1 to 18, characterised in that the support member (53) of the pair of wire and power supply grippers (20) is pivotable in both directions transversely of the direction of feed and about a pivot pin (52) through an angle ($\alpha$).

16. Apparatus according to claim 15, characterised in that the support member (53) of the pair of wire and power supply grippers (20) has at its end (54) which is opposite the welding wire feed a bore through which passes an adjusting spindle (55) which is adjustable in the transverse direction and which is equipped with drive means (57) which bear on the support (54).

17. Apparatus according to claim 15, characterised in that the adjusting spindle (55) is provided at one end with a steeply threaded bush (57) which, by rotary movement in a nut (58) executes an adjusting travel in both directions of rotation and, by means of the drive means (56), adjusts the welding head support (53) in the sense of pivoting the same.

18. Apparatus according to claim 16, characterised in that the nut (58) is supported transversely displaceably and lockably in an adjusting sleeve (77) mounted in the support housing (7) and serving for transverse adjustment purposes.

19. Apparatus according to claim 16, characterised in that the adjusting spindle (55) is, at its threaded end and by means of a shaft guide (59, 60) and an axially immovable but rotatable pin (61) and, mounted on this latter, an adjusting handle (62), can be displaced out of a central position in either direction of rotation by executing a rotary motion.

20. Apparatus according to claim 19, characterised in that in its zone which is mounted in the bore (63) of the support (53), the adjusting spindle (55) has a depression (64) into which, in the midway position, a ratchet (66) which is subject to spring action engages in a forcelocking fashion, separably locking the adjusting spindle (55) and also the support (53) in the midway position and in respect of each other.

21. Apparatus according to claims 14 to 20, characterised in that the drive means (56) are constructed from a sliding material, taking the form of discs (56) rotatable on the adjusting spindle (55) and subject to the force of coil springs (67, 68), the abutments (69, 70) of which are so fixed by locking nuts (71, 72) on threaded portions (73, 74) of the adjusting spindle (55) that any desired initial spring tension can be adjusted.

## Revendications

1. Dispositif pour relier des pièces métalliques par soudage par fusion à l'arc électrique, par un cordon de soudure de faible volume (soudage en fente étroite), comprenant des moyens pour pousser et pour guider le fil de soudage ainsi que pour guider la poudre de soudage et une pince d'alimentation de fil et de courant (20), susceptible de basculer suivant un angle, transversalement à la direction d'avancement, sous la forme d'une épée avec des organes de guidage de fil et comportant un bras fixe (21) et un bras (25) susceptible d'être pressé par la force d'un ressort, caractérisé en ce que:

— au-dessus de la pince d'alimentation de fil et de courant (20), pour l'alignement et l'alimentation du fil de soudage, il y a au moins trois unités à galets d'alignement (10, 11) avec chaque fois au moins trois galets d'alignement (12, 13) coopérants, chaque unité à galets d'alimentation (10) est susceptible de pivoter d'un angle quelconque par rapport à chaque unité à galets d'alimentation (11) en amont et en aval, et peut se fixer dans la position choisie, et en ce que la pince d'alimentation de fil et de courant (20) se compose d'un bras fixe (21) avec des patins de guidage (22, 23) pour le fil de soudage (24) et d'un bras mobile (25) coulissant parallèlement par rapport au précédent, et muni d'une pièce de contact (33) pour l'alimentation du courant.

2. Dispositif selon la revendication 1, caractérisé en ce que le dispositif d'alignement à galets (8) formé d'au moins trois unités à galets (10, 11) reliées en rotation les unes par rapport aux autres, et l'organe de support (53) de la pince d'alimentation de fil et de courant (20) sont fixés sur le boîtier de support (7) par l'intermédiaire d'un goujon d'axe de basculement (52), boîtier qui est prévu sur le support de la machine de soudage.

3. Dispositif selon l'une des revendications 1 et 2, caractérisé en ce que chaque unité à galets d'alignement (10, 11) est montée dans un boîtier de galet cylindrique (9).

4. Dispositif selon la revendication 3, caractérisé en ce que chaque boîtier de galet (9) est muni d'une tête de support (9a) avec un épaulement cylindrique (9b) et une garniture de centrage (9c) adaptée avec un siège étroit dans l'épaulement cylindrique (9b), et ayant une rainure annulaire dans la zone filetée, et en ce que l'épaulement de centrage (9c) peut se serrer à l'aide de vis de pression (9c) réparties de façon périphérique, dans la tête de support (9a).

5. Dispositif selon la revendication 1, caractérisé en ce que le bras (21) comporte à une certaine distance, au moins deux patins de guidage (22, 23) pour le fil de soudage (24) et en outre dans la zone inférieure de la pince d'alimentation de fil et de courant (20), il est prévu au moins un patin de centrage (28) muni d'un guidage à rainures et ressorts (30, 31).

6. Dispositif selon l'une des revendications 1 à 5, caractérisé en ce que:

— à l'extrémité inférieure de la pince d'alimentation de fil et de courant (20), le bras (21) est muni d'un galet de glissement (32) isolant, résistant à l'usure, comme plaque de contre-appui pour le fil de soudage (24), et qui est guidé sur une pièce de contact (33) interchangeable du bras (25) mobile parallèlement, comportant une rainure de guidage adaptée au diamètre du fil de soudage, cette pièce (33) étant en un matériau conducteur de préférence en un alliage de cuivre.

7. Dispositif selon les revendications 1—6, caractérisé en ce que:

— dans la zone inférieure de la pince d'alimentation de fil et de courant (20), l'un ou les deux bras (21, 25) sont munis sur leur face frontale, au milieu, d'un support isolant avec des galets du guidage (34, 35) rotatifs et interchangeables, sur des goujons d'axe, parallèles à l'axe du fil de soudage.

8. Dispositif selon les revendications 1—7, caractérisé en ce que l'épaisseur des bras (21, 25) diminue de façon continue en partant du haut.

9. Dispositif selon les revendications 1—8, caractérisé en ce que les bras (21, 25) sont munis de canaux (36, 37) pour le passage d'un agent de refroidissement et d'ajutage correspondant pour les raccords de tuyaux (38, 39, 40, 41).

10. Dispositif selon les revendications 1—9, caractérisé en ce que les bras (21, 25) sont en un matériau anti-magnétique à bonne caractéristique de conductibilité thermique et électrique.

11. Dispositif selon les revendications 1 à 10, caractérisé en ce que:

— le bras (25) mobile parallèlement au bras (21), est guidé en coulissement sur des rails de guidage ou des colonnes de guidage (42, 43), parallèles entre elles et perpendiculaires à l'axe du fil de soudage, et qui sont fixées sur l'organe de support (53).

12. Dispositif selon les revendications 1—11, caractérisé en ce que le bras (25) mobile parallèlement, est poussé en direction du fil de soudage (24) par une force d'application et en ce que l'intensité de cette force est réglable à l'aide d'un dispositif de réglage (47, 48, 49, 50).

13. Dispositif selon la revendication 12, caractérisé en ce que l'intensité de la force d'application peut se lire sur un instrument de mesure (51) à l'aide d'une boîte manométrique intégrée.

14. Dispositif selon les revendications 1—11, caractérisé en ce qu'un dispositif d'affichage (75, 76) est prévu sur l'organe de support (53) ou sur le bras (21) et dont l'affichage indique la translation relative entre le bras fixe (21) et le bras mobile parallèlement (25).

15. Dispositif selon les revendications 1—14, caractérisé en ce que le support (53) de la pince d'alimentation de fil et de courant (20) peut basculer d'un angle ($\alpha$) dans les deux directions, transversalement à la direction de déplacement, autour d'un goujon de basculement (52).

16. Dispositif selon la revendication 15, caractérisé en ce que le support (53) de la pince d'alimentation de fil et de courant (20) comporte un perçage à son extrémité (54) opposée à l'alimentation du fil de soudage, et qui est traversé par une broche de réglage (55) réglable dans la direction transversale et munie d'organes d'entraînement (56) appliqués contre le support (54).

17. Dispositif selon la revendication 15, caractérisé en ce qu'une extrémité de la broche de réglage (55) est munie d'une douille filetée (57) à pas rapide, et qui, par rotation, effectue un mouvement de réglage dans les deux sens dans un écrou (58) et déplace le support de la tête de soudage (53) dans le sens d'un basculement par l'intermédiaire des organes d'entraînement (56).

18. Dispositif selon la revendication 16, caractérisé en ce que l'écrou (58) est maintenu coulissant transversalement et peut être bloqué dans une douille de réglage (77) prévue dans le boîtier de support (7) et servant au réglage transversal.

19. Dispositif selon la revendication 16, caractérisé en ce que:

— à son extrémité située du côté du filetage, la broche de réglage (55) peut être coulissée par l'intermédiaire d'un guidage à rainure d'axe (59, 60) et un goujon (61) fixe axialement mais rotatif et une poignée de réglage (62) fixée à celui-ci, chaque fois d'un mouvement de rotation dans les deux sens de rotation par rapport à sa position médiane.

20. Dispositif selon la revendication 19, caractérisé en ce que la broche de réglage (55) comporte une cavité (64) dans sa zone située dans le perçage (63) du support (53) et dans laquelle vient prendre par une liaison par la force, un moyen d'encliquetage (66) soumis à l'action d'un ressort, en position médiane, et qui verrouille la broche de réglage (55) ainsi que le support (53), l'un par rapport à l'autre dans la position médiane.

21. Dispositif selon les revendications 14—20, caractérisé en ce que les organes d'entraînement (56) sont réalisés sous la forme de rondelles (56) tournant sur la broche de réglage (55), en un matériau glissant, et qui sont soumis à la force développée par des ressorts hélicoïdaux (67, 68), et dont les appuis (69, 70) sont fixés à l'aide de contreécrous (71, 72) de façon telle sur les segments filetés (73, 74) de la broche de réglage (55) que la précontrainte de ressort, choisie à chaque fois réglable.

FIG.1

FIG.4

FIG.2

# FIG.3

# FIG.6

FIG.5

FIG.8

FIG.7

FIG.9

FIG.10

FIG.11

FIG.12

FIG.13